# EUROPEAN PATENT APPLICATION

(11) **EP 4 835 679 A2**
(43) Date of publication of application: **04.11.2026**
(21) Application number: 26188942.2
(22) Date of filing: 30.06.2026
(51) Int. Cl.: G06F 13/42

(54) **MULTI-CORE HETEROGENEOUS SOC, DEBUGGING METHOD FOR MULTI-CORE HETEROGENEOUS SOC, ELECTRONIC DEVICE, AND STORAGE MEDIUM**

(30) Priority: 30.12.2025 CN 202512042254
(71) Applicant: XG TECH PTE. LTD., Singapore 179098 (SG)
(72) Inventor: ZHENG, Dejin, 179098 Singapore (SG)
(74) Representative: Casalonga

(57) **Abstract**

Disclosed are a multi-core heterogeneous SoC, a debugging method for the SoC, an electronic device, and a storage medium. The SoC is provided with a USB device and integrates a plurality of heterogeneous systems. A first virtual UART serial port in the heterogeneous system establishes a binding relationship with target USB endpoints in the USB device connected to a USB host disposed in a debugging device. A second virtual UART serial port in the debugging device and corresponding to the heterogeneous system establishes a binding relationship with the target USB endpoints in the USB device through the USB host. The SoC is configured to transmit debugging data corresponding to the heterogeneous system with the debugging device through the USB device and the USB host based on the first virtual UART serial port, the target USB endpoints, and the second virtual UART serial port in the debugging device.

## Description

### FIELD OF THE INVENTION

The present disclosure relates to the field of computer technologies, and in particular, to a multi-core heterogeneous SoC, a debugging method for a multi-core heterogeneous SoC, an electronic device, and a storage medium.

### BACKGROUND OF THE INVENTION

With rapid development of integrated circuit technologies, multi-core heterogeneous SoCs (systems on chip) have become mainstream. During development, testing, and fault diagnosis stages of a multi-core heterogeneous SoC, debugging of heterogeneous systems integrated in the multi-core heterogeneous SoC is of critical importance.

Among debugging approaches for the heterogeneous systems, a UART (universal asynchronous receiver/transmitter) serial port debugging approach has gradually become one of the mainstream debugging approaches due to advantages such as mature technologies and low implementation costs. In the UART serial port debugging approach, each independently running heterogeneous system corresponds to a dedicated physical UART serial port. The heterogeneous system transmits running logs and debugging information of the heterogeneous system to a host computer in real time through the UART serial port, and debugging personnel perform monitoring of a running state and troubleshooting on the heterogeneous system based on this information.

However, when a large quantity of heterogeneous systems are integrated in the multi-core heterogeneous SoC, the multi-core heterogeneous SoC needs to be provided with a large quantity of UART serial ports, which increases the complexity of chip packaging and printed circuit board (PCB) routing.

### SUMMARY OF THE INVENTION

To resolve the foregoing technical problem, the present disclosure provides a multi-core heterogeneous SoC, a debugging method for a multi-core heterogeneous SoC, an electronic device, and a storage medium, so as to reduce the complexity of chip packaging and printed circuit board routing.

According to an embodiment in a first aspect of the present disclosure, a multi-core heterogeneous SoC is provided, where the multi-core heterogeneous SoC is provided with a USB device and integrates a plurality of heterogeneous systems, a first virtual UART serial port in the heterogeneous system establishes a binding relationship with target USB endpoints in the USB device, the USB device is connected to a USB host disposed in a debugging device, and a second virtual UART serial port that is in the debugging device and is corresponding to the heterogeneous system establishes a binding relationship with the target USB endpoints in the USB device through the USB host; and
the multi-core heterogeneous SoC is configured to transmit debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints.

According to an embodiment in a second aspect of the present disclosure, a debugging method for a multi-core heterogeneous SoC is provided, where the method is applied to the multi-core heterogeneous SoC according to the embodiment in the first aspect of the present disclosure, the multi-core heterogeneous SoC is provided with a USB device and integrates a plurality of heterogeneous systems, a first virtual UART serial port in the heterogeneous system establishes a binding relationship with target USB endpoints in the USB device, the USB device is connected to a USB host disposed in a debugging device, and a second virtual UART serial port that is in the debugging device and is corresponding to the heterogeneous system establishes a binding relationship with the target USB endpoints in the USB device through the USB host; and the method includes:
transmitting, by the multi-core heterogeneous SoC, debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints.

According to an embodiment in a third aspect of the present disclosure, a debugging apparatus for a multi-core heterogeneous SoC is provided, where the apparatus is applied to the multi-core heterogeneous SoC according to the embodiment in the first aspect of the present disclosure, the multi-core heterogeneous SoC is provided with a USB device and integrates a plurality of heterogeneous systems, a first virtual UART serial port in the heterogeneous system establishes a binding relationship with target USB endpoints in the USB device, the USB device is connected to a USB host disposed in a debugging device, and a second virtual UART serial port that is in the debugging device and is corresponding to the heterogeneous system establishes a binding relationship with the target USB endpoints in the USB device through the USB host; and the apparatus includes:
a debugging module, configured to transmit, through the multi-core heterogeneous SoC, debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints.

According to an embodiment in a fourth aspect of the present disclosure, an electronic device is provided. The electronic device includes: a processor; and a memory, configured to store instructions executable by the processor. The processor is configured to read the executable instructions from the memory, and execute the instructions to implement the debugging method for a multi-core heterogeneous SoC according to the embodiment in the second aspect described above.

According to an embodiment in a fifth aspect of the present disclosure, a computer readable storage medium is provided. The storage medium stores a computer program, and the computer program is executed by a processor to implement the debugging method for a multi-core heterogeneous SoC according to the embodiment in the second aspect described above.

According to an embodiment in a sixth aspect of the present disclosure, a computer program product is provided. When instructions in the computer program product are executed by a processor, the debugging method for a multi-core heterogeneous SoC according to the embodiment in the second aspect of the present disclosure is implemented.

Embodiments of the present disclosure provide a multi-core heterogeneous SoC, a debugging method for a multi-core heterogeneous SoC, an electronic device, and a storage medium. The multi-core heterogeneous SoC is provided with the USB device and integrates a plurality of heterogeneous systems. The first virtual UART serial port in the heterogeneous system establishes a binding relationship with the target USB endpoints in the USB device. The USB device is connected to the USB host disposed in the debugging device. The second virtual UART serial port that is in the debugging device and is corresponding to the heterogeneous system establishes a binding relationship with the target USB endpoints in the USB device through the USB host. The multi-core heterogeneous SoC is configured to transmit the debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints. In this way, the multi-core heterogeneous SoC does not need to provide a physical UART serial port for each heterogeneous system, but only needs to provide one USB device, thereby reducing the quantity of pins of the multi-core heterogeneous SoC, and further reducing the complexity of chip packaging and printed circuit board routing.

### BRIEF DESCRIPTION OF THE DRAWINGS

FIG. 1 is a schematic diagram of a structure of a debugging system according to an exemplary embodiment of the present disclosure;
FIG. 2 is a schematic diagram of a structure of a debugging system according to another exemplary embodiment of the present disclosure;
FIG. 3 is a schematic flowchart of a debugging method for a multi-core heterogeneous SoC according to another exemplary embodiment of the present disclosure;
FIG. 4 is an exemplary schematic flowchart of a debugging method for a multi-core heterogeneous SoC according to still another exemplary embodiment of the present disclosure;
FIG. 5 is a schematic diagram of a structure of a debugging apparatus for a multi-core heterogeneous SoC according to an exemplary embodiment of the present disclosure; and
FIG. 6 is a diagram of a structure of an electronic device according to an exemplary embodiment of the present disclosure.

### DETAILED DESCRIPTION OF THE EMBODIMENTS

To explain the present disclosure, exemplary embodiments of the present disclosure are described below in detail with reference to accompanying drawings. Obviously, the embodiments described are merely some, rather than all of embodiments of the present disclosure. It should be understood that the present disclosure is not limited by the exemplary embodiments.

It should be noted that, unless otherwise specifically stated, the relative arrangement of components and steps, numerical expressions, and numerical values set forth in these embodiments do not limit the scope of the present disclosure.

### Application overview

With rapid development of integrated circuit technologies, multi-core heterogeneous SoCs have become mainstream. During development, testing, and fault diagnosis stages of a multi-core heterogeneous SoC, debugging of heterogeneous systems integrated in the multi-core heterogeneous SoC is of critical importance.

Among debugging approaches for the heterogeneous systems, a UART serial port debugging approach has gradually become one of the mainstream debugging approaches due to advantages such as mature technologies and low implementation costs. In the UART serial port debugging approach, each independently running heterogeneous system corresponds to a dedicated physical UART serial port. The heterogeneous system transmits running logs and debugging information of the heterogeneous system to a host computer in real time through the UART serial port, and debugging personnel perform monitoring of a running state and troubleshooting on the heterogeneous system based on this information.

However, when a large quantity of heterogeneous systems are integrated in the multi-core heterogeneous SoC, the multi-core heterogeneous SoC needs to be provided with a large quantity of UART serial ports, which increases the complexity of chip packaging and printed circuit board routing.

In embodiments of the present disclosure, the multi-core heterogeneous SoC is provided with a USB device and integrates a plurality of heterogeneous systems. A first virtual UART serial port in the heterogeneous system establishes a binding relationship with target USB endpoints in the USB device. The USB device is connected to a USB host disposed in a debugging device. A second virtual UART serial port that is in the debugging device and is corresponding to the heterogeneous system establishes a binding relationship with the target USB endpoints in the USB device through the USB host. The multi-core heterogeneous SoC is configured to transmit debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints. In this way, the multi-core heterogeneous SoC does not need to provide a physical UART serial port for each heterogeneous system, but only needs to provide one USB device, thereby reducing the quantity of pins of the multi-core heterogeneous SoC, and thus reducing the complexity of chip packaging and printed circuit board routing.

### Exemplary system

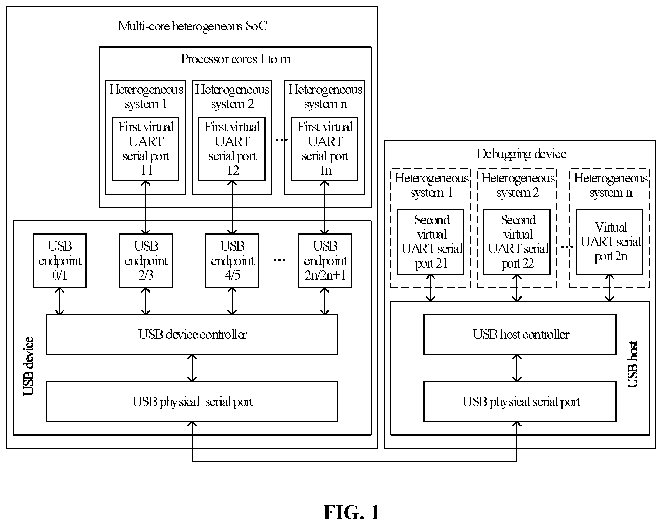

FIG. 1 is a schematic diagram of a structure of a debugging system according to an exemplary embodiment of the present disclosure. As shown in FIG. 1, the debugging system includes a multi-core heterogeneous SoC and a debugging device. The multi-core heterogeneous SoC may be disposed in an electronic device, and the electronic device may be a smart terminal, an in-vehicle terminal, an intelligent driving domain controller, or a central computing platform. This embodiment of the present disclosure does not impose any limitation thereon. The debugging device may be a smart terminal, a general-purpose computer, or a hardware debugger, which is not limited in this embodiment of the present disclosure.

As shown in FIG. 1, the multi-core heterogeneous SoC is provided with a USB device and integrates a plurality of heterogeneous systems. A first virtual UART serial port in the heterogeneous system establishes a binding relationship with target USB endpoints in the USB device. The USB device is connected to a USB host disposed in a debugging device. A second virtual UART serial port that is in the debugging device and is corresponding to the heterogeneous system establishes a binding relationship with the target USB endpoints in the USB device through the USB host. The multi-core heterogeneous SoC is configured to transmit debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints.

For example, referring to FIG. 1, the multi-core heterogeneous SoC is typically provided with a plurality of processor cores. For example, as shown in FIG. 1, the multi-core heterogeneous SoC is provided with m processor cores, that is, processor cores 1 to m. The processor cores disposed in the multi-core heterogeneous SoC may include a central processing unit (CPU), a graphics processing unit (GPU), a digital signal processor (DSP), and an image signal processor (ISP), which is not limited in this embodiment of the present disclosure. The plurality of processor cores of the multi-core heterogeneous SoC may run a plurality of heterogeneous systems. In other words, there are a plurality of heterogeneous systems integrated in the multi-core heterogeneous SoC. For example, as shown in FIG. 1, the m processor cores of the multi-core heterogeneous SoC run n heterogeneous systems, that is, heterogeneous systems 1 to n. Each heterogeneous system may be configured to execute a particular type of task or run a particular operating system. A heterogeneous system may be deployed either on one or more processor cores or within a virtual machine, where the virtual machine may be deployed on the one or more processor cores. This embodiment of the present disclosure does not impose any limitation thereon.

Referring to FIG. 1 again, a physical USB device is disposed in the multi-core heterogeneous SoC, and a physical USB host is disposed in the debugging device. The USB host is a control end in USB communication, the USB device is a slave end in the USB communication, and the USB host and the USB device are connected through a USB cable. Further, the USB device is provided with a plurality of USB endpoints. The USB endpoint is a logical entity within the USB device that is used for data transmission. Each USB endpoint is a unidirectional data buffer for receiving or sending data, and corresponds to a unique endpoint address (USB device address + endpoint number + transmission direction). For example, as shown in FIG. 1, USB endpoint 0, USB endpoint 2, ..., and USB endpoint 2n in the USB device are USB endpoints for sending data, while USB endpoint 1, USB endpoint 3, ..., and USB endpoint 2n+1 are USB endpoints for receiving data. Further, each heterogeneous system of the multi-core heterogeneous SoC is provided with one first virtual UART serial port. To be specific, the first virtual UART serial port does not include physical pins. To enable the heterogeneous system to perform bidirectional transmission of the debugging data with the debugging device through the USB device and the USB host based on the first virtual UART serial port, the first virtual UART serial port in each heterogeneous system establishes a binding relationship with a set of USB endpoints in the USB device. The set of USB endpoints includes a USB endpoint for sending data and a USB endpoint for receiving data. In other words, both the USB endpoint for sending data and the USB endpoint for receiving data in the set of USB endpoints are target USB endpoints bound to the first virtual UART serial port. For example, as shown in FIG. 1, in the multi-core heterogeneous SoC, a first virtual UART serial port 11 in a heterogeneous system 1 establishes a binding relationship with the USB endpoint 2 and the USB endpoint 3 in the USB device, a first virtual UART serial port 12 in a heterogeneous system 2 establishes a binding relationship with a USB endpoint 4 and a USB endpoint 5 in the USB device, and so on.

Referring to FIG. 1 again, the debugging device is provided with one second virtual UART serial port for each heterogeneous system of the multi-core heterogeneous SoC. To enable the debugging device to perform bidirectional transmission of the debugging data with the heterogeneous system through the USB host and the USB device based on the first virtual UART serial port, each second virtual UART serial port in the debugging device establishes a binding relationship with a set of USB endpoints in the USB device through the USB host. The set of USB endpoints includes a USB endpoint for sending data and a USB endpoint for receiving data. It should be noted that the first virtual UART serial port and the second virtual UART serial port corresponding to the same heterogeneous system need to be bound to the same set of USB endpoints. For example, as shown in FIG. 1, in the multi-core heterogeneous SoC, the first virtual UART serial port 11 in the heterogeneous system 1 establishes a binding relationship with the USB endpoint 2 and the USB endpoint 3 in the USB device. Correspondingly, in the debugging device, a second virtual UART serial port 21 corresponding to the heterogeneous system 1 establishes a binding relationship with the USB endpoint 2 and the USB endpoint 3 in the USB device. The first virtual UART serial port 12 in the heterogeneous system 2 establishes a binding relationship with the USB endpoint 4 and the USB endpoint 5 in the USB device. Correspondingly, a second virtual UART serial port 22 corresponding to the heterogeneous system 2 establishes a binding relationship with the USB endpoint 4 and the USB endpoint 5 in the USB device. In this way, communication channels are established between the heterogeneous system and the debugging device through the first virtual UART serial port, the USB endpoints in the USB device, and the second virtual UART serial port. Moreover, each heterogeneous system only occupies some of the communication channels of the USB device.

Referring to FIG. 1 again, for each heterogeneous system in the multi-core heterogeneous SoC, the heterogeneous system bidirectionally transmits the debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port that is in the debugging device and is bound to the target USB endpoints. For a scenario in which the heterogeneous system transmits the debugging data to the debugging device, first, the heterogeneous system may send, through the first virtual UART serial port in the heterogeneous system, the debugging data to target USB endpoints that are in the USB device and are bound to the first virtual UART serial port. The target USB endpoints are USB endpoints bound to the first virtual UART serial port for sending data. Subsequently, the USB device may send the debugging data received through the target USB endpoints to the USB host in the debugging device. Thereafter, the USB host may send the received debugging data to the second virtual UART serial port bound to the target USB endpoints. In this way, the debugging device may receive, through the second virtual UART serial port corresponding to the heterogeneous system, the debugging data sent by the heterogeneous system. For example, as shown in FIG. 1, taking the heterogeneous system 1 sending the debugging data to the debugging device as an example, first, the heterogeneous system 1 sends the debugging data to the USB endpoint 2 in the USB device through the first virtual UART serial port 11. Subsequently, the USB device sends the debugging data received through the USB endpoint 2 to the USB host in the debugging device. Thereafter, the USB host sends the received debugging data to the second virtual UART serial port 21 corresponding to the heterogeneous system 1 in the debugging device. In this way, the debugging device receives, through the second virtual UART serial port 21, the debugging data sent by the heterogeneous system 1. For a scenario in which the debugging device transmits the debugging data to the heterogeneous system, first, the debugging device may send the debugging data to the USB host through the second virtual UART serial port corresponding to the heterogeneous system. Subsequently, the USB host may send the received debugging data to target USB endpoints that are in the USB device and are bound to the second virtual UART serial port. The target USB endpoints are USB endpoints for receiving data. Thereafter, the USB device may send the debugging data received through the target USB endpoints to the first virtual UART serial port bound to the target USB endpoints. In this way, the heterogeneous system may receive, through the first virtual UART serial port, the debugging data sent by the debugging device. For example, taking the debugging device sending the debugging data to the heterogeneous system 1 as an example, first, the debugging device sends the debugging data to the USB host through the second virtual UART serial port 21 corresponding to the heterogeneous system 1. Subsequently, the USB host sends the received debugging data to the USB endpoint 3 in the USB device. Thereafter, the USB device sends the debugging data received through the USB endpoint 3 to the first virtual UART serial port 11 in the heterogeneous system 1. In this way, the heterogeneous system 1 receives, through the first virtual UART serial port 11, the debugging data sent by the debugging device.

Assuming that the multi-core heterogeneous SoC integrates 15 heterogeneous systems, if the multi-core heterogeneous SoC provides a physical UART serial port for each heterogeneous system, with each physical UART serial port including 2 pins, the multi-core heterogeneous SoC needs to provide 30 pins. However, in this embodiment of the present disclosure, the multi-core heterogeneous SoC provides a virtual UART serial port for each heterogeneous system, and provides one physical USB device. The one physical USB device includes 32 USB endpoints. After removing 2 endpoints used for control instruction transmission, the one physical USB device can support a maximum of 15 heterogeneous systems. In this way, the virtual UART serial port does not include pins but the physical USB device includes 2 to 3 pins, and the multi-core heterogeneous SoC only needs to provide 2 to 3 pins. Further, when more than 15 heterogeneous systems are integrated in the multi-core heterogeneous SoC, the multi-core heterogeneous SoC only needs to add one more physical USB device. In this case, the quantity of added pins is also only 2 to 3, which is far less than the quantity of pins required for providing a physical UART serial port for each heterogeneous system.

In this embodiment of the present disclosure, the multi-core heterogeneous SoC does not need to provide a physical UART serial port for each heterogeneous system, but only needs to provide one USB device, thereby reducing the quantity of pins of the multi-core heterogeneous SoC, and thus reducing the complexity of chip packaging and printed circuit board routing.

In an embodiment, the multi-core heterogeneous SoC is further configured to, in response to a power-on startup, invoke a USB device driver stack corresponding to the USB device to initialize the USB device.

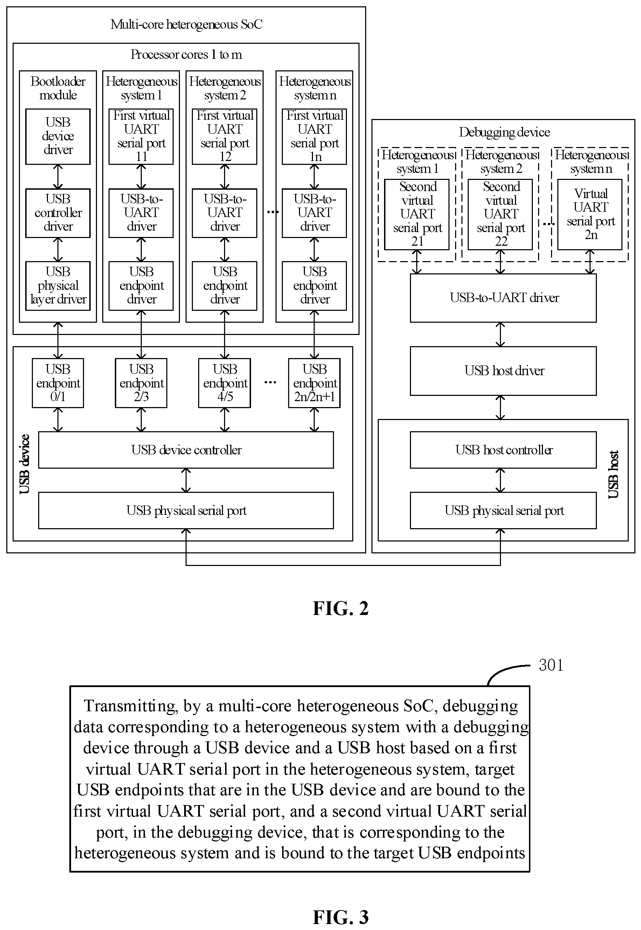

For example, as shown in FIG. 2, a bootloader module may run on the plurality of processor cores of the multi-core heterogeneous SoC. The bootloader module integrates the USB device driver stack corresponding to the USB device. The USB device driver stack may include a USB device driver, a USB controller driver, and a USB physical layer driver. The USB device driver is configured to, in response to an enumeration request of the USB host, send a device descriptor, a configuration descriptor, and an endpoint descriptor to the USB host. The USB controller driver is configured to map an address space of a controller register, initialize USB endpoint resources, enable USB interrupts, and configure a USB device address. The USB physical layer driver is configured to enable a physical layer clock and power supply, configure a physical layer operating mode, and configure physical layer electrical characteristics. To ensure that the bootloader module can initialize the USB device, a set of USB endpoints may be reserved in advance in the USB device, and a binding relationship may be established with the bootloader module. The set of USB endpoints also includes a USB endpoint for sending data and a USB endpoint for receiving data. For example, as shown in FIG. 2, the bootloader module establishes a binding relationship with the USB endpoint 0 and the USB endpoint 1 in the USB device. After the multi-core heterogeneous SoC is powered on and started, the bootloader module is started first. After being started, the bootloader module invokes the USB device driver, the USB controller driver, and the USB physical layer driver corresponding to the USB device to perform an initialization operation on the USB device in the multi-core heterogeneous SoC. After being initialized, the USB device may be recognized by the USB host.

In this embodiment of the present disclosure, after the multi-core heterogeneous SoC is powered on and started, the bootloader module in the multi-core heterogeneous SoC invokes the USB device driver stack corresponding to the USB device to initialize the USB device, so as to ensure that the USB device can be recognized by the USB host.

In an embodiment, the multi-core heterogeneous SoC is further configured to, in response to the USB host recognizing the USB device, send configuration information corresponding to the USB device to the USB host. The configuration information is used for the debugging device to register the second virtual UART serial port corresponding to the heterogeneous system, and to establish the binding relationship between the second virtual UART serial port and the target USB endpoints in the USB device.

For example, as shown in FIG. 2, the USB host is disposed in the debugging device, and a USB host driver and a USB-to-UART driver are running in the debugging device. After being powered on and started, the debugging device invokes the USB host driver to perform an initialization operation on the USB host in the debugging device. After the USB device in the multi-core heterogeneous SoC is initialized, the USB host in the debugging device may recognize the USB device. Correspondingly, after recognizing the USB device, the USB host may send an enumeration request to the USB device. At this point, in response to the enumeration request sent by the USB host, the USB device may send configuration information corresponding to the USB device to the USB host. The configuration information may include a device descriptor, a configuration descriptor, an interface descriptor, and an endpoint descriptor. After receiving the configuration information sent by the USB device, the USB host may establish USB communication with the USB device. During a process in which the USB host establishes USB communication with the USB device, for each heterogeneous system, the debugging device may invoke the USB-to-UART driver based on the configuration information corresponding to the USB device, to register a second virtual UART serial port for this heterogeneous system, and further establish a binding relationship between the second virtual UART serial port and the target USB endpoints in the USB device. The target USB endpoints that establish the binding relationship with the second virtual UART serial port are USB endpoints in the USB device that establish a binding relationship with the first virtual UART serial port corresponding to the heterogeneous system. In other words, the first virtual UART serial port and the second virtual UART serial port corresponding to the same heterogeneous system are bound to the same USB endpoints. To enable the debugging device to perform bidirectional transmission of the debugging data with the heterogeneous system through the USB host and the USB device based on the first virtual UART serial port, each second virtual UART serial port establishes a binding relationship with a set of USB endpoints in the USB device through the USB host. The set of USB endpoints includes a USB endpoint for sending data and a USB endpoint for receiving data. It should be noted that the first virtual UART serial port and the second virtual UART serial port corresponding to the same heterogeneous system need to be bound to the same set of USB endpoints. For example, as shown in FIG. 1, in the multi-core heterogeneous SoC, the first virtual UART serial port 11 in the heterogeneous system 1 establishes a binding relationship with the USB endpoint 2 and the USB endpoint 3 in the USB device. Correspondingly, in the debugging device, the second virtual UART serial port 21 corresponding to the heterogeneous system 1 establishes a binding relationship with the USB endpoint 2 and the USB endpoint 3 in the USB device. The first virtual UART serial port 12 in the heterogeneous system 2 establishes a binding relationship with the USB endpoint 4 and the USB endpoint 5 in the USB device. Correspondingly, the second virtual UART serial port 22 corresponding to the heterogeneous system 2 establishes a binding relationship with the USB endpoint 4 and the USB endpoint 5 in the USB device. In this way, communication channels are established between the heterogeneous system and the debugging device through the first virtual UART serial port, the USB endpoints in the USB device, and the second virtual UART serial port. Moreover, each heterogeneous system only occupies some of the communication channels of the USB device.

In this embodiment of the present disclosure, after the USB device is initialized, the USB host sends an enumeration request to the USB device. In response to the enumeration request sent by the USB host, the USB device sends configuration information corresponding to the USB device to the USB host. For each heterogeneous system, the debugging device registers a second virtual UART serial port for this heterogeneous system based on the configuration information corresponding to the USB device, and further establishes a binding relationship between the second virtual UART serial port and the target USB endpoints in the USB device. The target USB endpoints that establish the binding relationship with the second virtual UART serial port is a USB endpoint in the USB device that establishes a binding relationship with the first virtual UART serial port corresponding to the heterogeneous system. Subsequently, the heterogeneous system may perform bidirectional transmission of the debugging data based on the same target USB endpoints bound to the first virtual UART serial port and the second virtual UART serial port.

In an embodiment, the multi-core heterogeneous SoC is further configured to initialize the heterogeneous system, register the first virtual UART serial port in the heterogeneous system, and establish the binding relationship between the first virtual UART serial port and the target USB endpoints in the USB device.

For example, as shown in FIG. 2, after the multi-core heterogeneous SoC is powered on and started, the bootloader module is started first. After being started, the bootloader module may start the heterogeneous systems. Each heterogeneous system runs a USB-to-UART driver and a USB endpoint driver. After being started, the heterogeneous system may invoke the USB-to-UART driver to register a first virtual UART serial port in this heterogeneous system. Subsequently, the heterogeneous system invokes the USB endpoint driver to establish the binding relationship between the first virtual UART serial port and the target USB endpoints in the USB device. To enable the heterogeneous system to perform bidirectional transmission of the debugging data with the debugging device through the USB device and the USB host based on the first virtual UART serial port, the first virtual UART serial port in each heterogeneous system establishes a binding relationship with a set of USB endpoints in the USB device. The set of USB endpoints includes a USB endpoint for sending data and a USB endpoint for receiving data. In other words, both the USB endpoint for sending data and the USB endpoint for receiving data in the set of USB endpoints are target USB endpoints bound to the first virtual UART serial port. For example, as shown in FIG. 2, in the multi-core heterogeneous SoC, the first virtual UART serial port 11 in the heterogeneous system 1 establishes a binding relationship with the USB endpoint 2 and the USB endpoint 3 in the USB device, the first virtual UART serial port 12 in the heterogeneous system 2 establishes a binding relationship with the USB endpoint 4 and the USB endpoint 5 in the USB device, and so on.

In this embodiment of the present disclosure, after the multi-core heterogeneous SoC is powered on and started, the bootloader module may start the heterogeneous systems. After being started, the heterogeneous system initializes the USB-to-UART driver and registers the first virtual UART serial port in the heterogeneous system. Subsequently, the heterogeneous system initializes the USB endpoint driver, and establishes the binding relationship between the first virtual UART serial port and the target USB endpoints in the USB device. Subsequently, the heterogeneous system may perform the bidirectional transmission of the debugging data with the debugging device through the USB device and the USB host based on the first virtual UART serial port.

In an embodiment, the multi-core heterogeneous SoC is specifically configured to receive, through target USB endpoints in the USB device based on the binding relationship between the first virtual UART serial port and the target USB endpoints, a debugging instruction corresponding to the heterogeneous system that is sent by the debugging device to the target USB endpoints in the USB device through the USB host based on the binding relationship between the second virtual UART serial port and the target USB endpoints.

For example, as shown in FIG. 2, for each heterogeneous system in the multi-core heterogeneous SoC, the debugging device may send a debugging instruction corresponding to the heterogeneous system to the heterogeneous system through the USB host and the USB device based on the second virtual UART serial port, target USB endpoints that are in the USB device and are bound to the second virtual UART serial port, and the first virtual UART serial port that is in the heterogeneous system and is bound to the target USB endpoints. First, the debugging device may send the debugging instruction to the USB host through the second virtual UART serial port corresponding to the heterogeneous system. Subsequently, the USB host may send the received debugging instruction to target USB endpoints that are in the USB device and are bound to the second virtual UART serial port. The target USB endpoints are USB endpoints for receiving data. Thereafter, the USB device may send the debugging instruction received through the target USB endpoints to the first virtual UART serial port bound to the target USB endpoints. In this way, the heterogeneous system may receive, through the first virtual UART serial port, the debugging instruction sent by the debugging device. For example, taking the debugging device sending the debugging instruction to the heterogeneous system 1 as an example, first, the debugging device sends the debugging instruction to the USB host through the second virtual UART serial port 21 corresponding to the heterogeneous system 1. Subsequently, the USB host sends the received debugging instruction to the USB endpoint 3 in the USB device. Thereafter, the USB device sends the debugging instruction received through the USB endpoint 3 to the first virtual UART serial port 11 in the heterogeneous system 1. In this way, the heterogeneous system 1 receives, through the first virtual UART serial port 11, the debugging instruction sent by the debugging device.

In this embodiment of the present disclosure, the multi-core heterogeneous SoC does not need to provide a physical UART serial port for each heterogeneous system, and only needs to provide one USB device. The heterogeneous system in the multi-core heterogeneous SoC receives, through target USB endpoints in the USB device based on the binding relationship between the first virtual UART serial port and the target USB endpoints, the debugging instruction corresponding to the heterogeneous system that is sent by the debugging device to the target USB endpoints in the USB device through the USB host based on the binding relationship between the second virtual UART serial port and the target USB endpoints. In this way, the quantity of pins of the multi-core heterogeneous SoC is reduced, thereby reducing the complexity of chip packaging and printed circuit board routing.

In an embodiment, the multi-core heterogeneous SoC is specifically configured to send system data corresponding to the heterogeneous system to the USB host in the debugging device through target USB endpoints in the USB device based on the binding relationship between the first virtual UART serial port and the target USB endpoints.

For example, as shown in FIG. 2, for each heterogeneous system in the multi-core heterogeneous SoC, the heterogeneous system may send the system data corresponding to the heterogeneous system to the debugging device through the USB device and the USB host based on the first virtual UART serial port in the heterogeneous system, target USB endpoints that are in the USB device and are bound to the first virtual UART serial port, and the second virtual UART serial port that is in the debugging device and is bound to the target USB endpoints. First, the heterogeneous system may send, through the first virtual UART serial port in the heterogeneous system, the system data to target USB endpoints that are in the USB device and are bound to the first virtual UART serial port. The target USB endpoints are USB endpoints for sending data. Subsequently, the USB device may send the system data received through the target USB endpoints to the USB host in the debugging device. Thereafter, the USB host may send the received system data to the second virtual UART serial port bound to the target USB endpoints. In this way, the debugging device receives, through the second virtual UART serial port corresponding to the heterogeneous system, the system data sent by the heterogeneous system. For example, as shown in FIG. 2, taking the heterogeneous system 1 sending the system data to the debugging device as an example, first, the heterogeneous system 1 sends the system data to the USB endpoint 2 in the USB device through the first virtual UART serial port 11. Subsequently, the USB device sends the system data received through the USB endpoint 2 to the USB host in the debugging device. Thereafter, the USB host sends the received system data to the second virtual UART serial port 21 corresponding to the heterogeneous system 1. In this way, the debugging device receives, through the second virtual UART serial port 21, the system data sent by the heterogeneous system 1.

In this embodiment of the present disclosure, the multi-core heterogeneous SoC does not need to provide a physical UART serial port for each heterogeneous system, and only needs to provide one USB device. The heterogeneous system in the multi-core heterogeneous SoC sends the system data corresponding to the heterogeneous system to the USB host in the debugging device through target USB endpoints in the USB device based on the binding relationship between the first virtual UART serial port and the target USB endpoints. In this way, the quantity of pins of the multi-core heterogeneous SoC is reduced, thereby reducing the complexity of chip packaging and printed circuit board routing.

### Exemplary method

FIG. 3 is a schematic flowchart of a debugging method for a multi-core heterogeneous SoC according to another exemplary embodiment of the present disclosure. The multi-core heterogeneous SoC is provided with a USB device and integrates a plurality of heterogeneous systems. A first virtual UART serial port in the heterogeneous system establishes a binding relationship with target USB endpoints in the USB device. The USB device is connected to a USB host disposed in a debugging device. A second virtual UART serial port that is in the debugging device and is corresponding to the heterogeneous system establishes a binding relationship with the target USB endpoints in the USB device through the USB host. As shown in FIG. 3, the debugging method for a multi-core heterogeneous SoC may include the following step.

Step 301: Transmitting, by the multi-core heterogeneous SoC, debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints.

In an embodiment, on the basis of the embodiment shown in FIG. 3, the debugging method for a multi-core heterogeneous SoC may further include the following step:
invoking, by the multi-core heterogeneous SoC in response to a power-on startup, a USB device driver stack corresponding to the USB device to initialize the USB device.

In an embodiment, on the basis of the embodiment shown in FIG. 3, the debugging method for a multi-core heterogeneous SoC may further include the following step:
sending, by the multi-core heterogeneous SoC in response to the USB host recognizing the USB device, configuration information corresponding to the USB device to the USB host. The configuration information is used for the debugging device to register the second virtual UART serial port corresponding to the heterogeneous system, and to establish the binding relationship between the second virtual UART serial port and the target USB endpoints in the USB device.

In an embodiment, on the basis of the embodiment shown in FIG. 3, the debugging method for a multi-core heterogeneous SoC may further include the following step:
initializing, by the multi-core heterogeneous SoC, the heterogeneous system, registering the first virtual UART serial port in the heterogeneous system, and establishing the binding relationship between the first virtual UART serial port and the target USB endpoints in the USB device.

In an embodiment, on the basis of the embodiment shown in FIG. 3, step 301 may include the following step:
receiving, by the multi-core heterogeneous SoC through target USB endpoints in the USB device based on the binding relationship between the first virtual UART serial port and the target USB endpoints, a debugging instruction corresponding to the heterogeneous system that is sent by the debugging device to the target USB endpoints in the USB device through the USB host based on the binding relationship between the second virtual UART serial port and the target USB endpoints.

In an embodiment, on the basis of the embodiment shown in FIG. 3, step 301 may include the following step:
sending, by the multi-core heterogeneous SoC, system data corresponding to the heterogeneous system to the USB host in the debugging device through target USB endpoints in the USB device based on the binding relationship between the first virtual UART serial port and the target USB endpoints.

Regarding the debugging method for a multi-core heterogeneous SoC in the foregoing embodiments, specific manners of performing operations in the steps and corresponding beneficial effects have been described in detail in the corresponding embodiments of the section of the multi-core heterogeneous SoC described above, and reference may be made to the corresponding execution operation manners and the beneficial technical effects in the exemplary system section described above. Details are not described herein again.

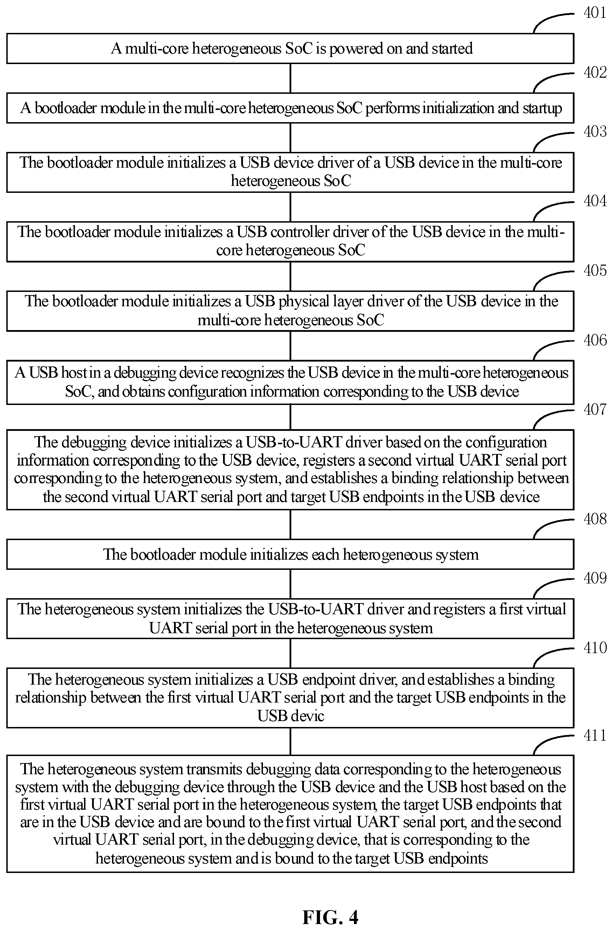

FIG. 4 is an exemplary schematic flowchart of a debugging method for a multi-core heterogeneous SoC according to still another exemplary embodiment of the present disclosure.

Step 401: A multi-core heterogeneous SoC is powered on and started.

Step 402: A bootloader module in the multi-core heterogeneous SoC performs initialization and startup.

Step 403: The bootloader module initializes a USB device driver of a USB device in the multi-core heterogeneous SoC.

Step 404: The bootloader module initializes a USB controller driver of the USB device in the multi-core heterogeneous SoC.

Step 405: The bootloader module initializes a USB physical layer driver of the USB device in the multi-core heterogeneous SoC.

Step 406: A USB host in a debugging device recognizes the USB device in the multi-core heterogeneous SoC, and obtains configuration information corresponding to the USB device.

Step 407: The debugging device initializes a USB-to-UART driver based on the configuration information corresponding to the USB device, registers a second virtual UART serial port corresponding to the heterogeneous system, and establishes a binding relationship between the second virtual UART serial port and target USB endpoints in the USB device.

Step 408: The bootloader module initializes each heterogeneous system.

Step 409: The heterogeneous system initializes the USB-to-UART driver and registers a first virtual UART serial port in the heterogeneous system.

Step 410: The heterogeneous system initializes a USB endpoint driver, and establishes a binding relationship between the first virtual UART serial port and the target USB endpoints in the USB device.

Step 411: The heterogeneous system transmits debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints.

### Exemplary apparatus

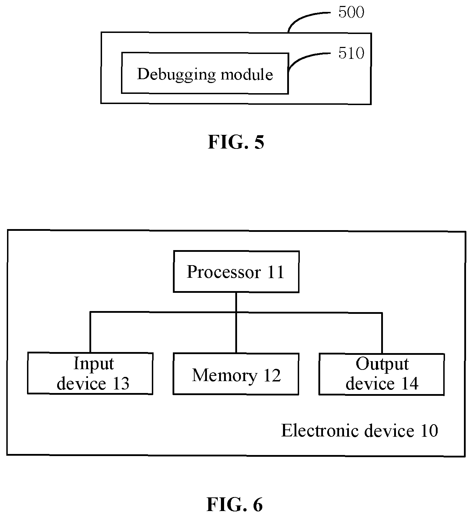

FIG. 5 is a schematic diagram of a structure of a debugging apparatus for a multi-core heterogeneous SoC according to an exemplary embodiment of the present disclosure. The debugging apparatus for a multi-core heterogeneous SoC is applied to the multi-core heterogeneous SoC described above. The multi-core heterogeneous SoC is provided with a USB device and integrates a plurality of heterogeneous systems. A first virtual UART serial port in the heterogeneous system establishes a binding relationship with target USB endpoints in the USB device. The USB device is connected to a USB host disposed in a debugging device. A second virtual UART serial port that is in the debugging device and is corresponding to the heterogeneous system establishes a binding relationship with the target USB endpoints in the USB device through the USB host. As shown in FIG. 5, a debugging apparatus 500 for a multi-core heterogeneous SoC includes a debugging module 510.

The debugging module 510 is configured to transmit, through the multi-core heterogeneous SoC, debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints.

In an embodiment, the debugging apparatus 500 for a multi-core heterogeneous SoC further includes:
a USB device initialization module, configured to invoke, by the multi-core heterogeneous SoC in response to a power-on startup, a USB device driver stack corresponding to the USB device to initialize the USB device.

In an embodiment, the debugging apparatus 500 for a multi-core heterogeneous SoC further includes:
a configuration information sending module, configured to send, through the multi-core heterogeneous SoC in response to the USB host recognizing the USB device, configuration information corresponding to the USB device to the USB host, where the configuration information is used for the debugging device to register the second virtual UART serial port corresponding to the heterogeneous system, and to establish the binding relationship between the second virtual UART serial port and the target USB endpoints in the USB device.

In an embodiment, the debugging apparatus 500 for a multi-core heterogeneous SoC further includes:
a heterogeneous system initialization module, configured to initialize, by the multi-core heterogeneous SoC, the heterogeneous system, register the first virtual UART serial port in the heterogeneous system, and establish the binding relationship between the first virtual UART serial port and the target USB endpoints in the USB device.

In an embodiment, the debugging module 510 includes:
a debugging instruction receiving unit, configured to receive, by the multi-core heterogeneous SoC through target USB endpoints in the USB device based on the binding relationship between the first virtual UART serial port and the target USB endpoints, a debugging instruction corresponding to the heterogeneous system that is sent by the debugging device to the target USB endpoints in the USB device through the USB host based on the binding relationship between the second virtual UART serial port and the target USB endpoints.

In an embodiment, the debugging module 510 includes:
a system data sending unit, configured to send, by the multi-core heterogeneous SoC, system data corresponding to the heterogeneous system to the USB host in the debugging device through target USB endpoints in the USB device based on the binding relationship between the first virtual UART serial port and the target USB endpoints.

For beneficial technical effects corresponding to the exemplary embodiment of this apparatus, refer to the corresponding beneficial technical effects of the exemplary method section described above, which are not repeated herein.

### Exemplary electronic device

FIG. 6 is a diagram of a structure of an electronic device according to an embodiment of the present disclosure. The electronic device includes at least one processor 11 and a memory 12.

The processor 11 may be a central processing unit (CPU) or another form of processing unit having a data processing capability and/or an instruction execution capability, and may control another component in the electronic device 10 to perform a desired function.

The memory 12 may include one or more computer program products, which may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. One or more computer program instructions may be stored on the computer readable storage medium. The processor 11 may run the one or more computer program instructions to implement the debugging method for a multi-core heterogeneous SoC according to various embodiments of the present disclosure that are described above and/or other desired functions.

In an example, the electronic device 10 may further include an input device 13 and an output device 14. These components are interconnected through a bus system and/or other forms of connection mechanisms (not shown).

The input device 13 may further include, for example, a keyboard or a mouse.

The output device 14 may output various information to the outside, and may include, for example, a display, a speaker, a printer, a communication network, and a remote output device connected to the communication network.

Certainly, for simplicity, FIG. 6 shows only some of the components in the electronic device 10 that are related to the present disclosure, and components such as a bus and an input/output interface are omitted. In addition, according to specific applications, the electronic device 10 may also include any other appropriate components.

Exemplary computer program product and computer readable storage medium

In addition to the foregoing method and device, embodiments of the present disclosure may also provide a computer program product including computer program instructions that, when run by a processor, cause the processor to perform the steps, of the debugging method for a multi-core heterogeneous SoC according to the embodiments of the present disclosure, that are described in the "Exemplary Method" section described above.

The computer program product may be program code, written with one or any combination of a plurality of programming languages that is configured to perform the operations in the embodiments of the present disclosure. The programming languages include an objectoriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by the processor, cause the processor to perform the steps, of the debugging method for a multi-core heterogeneous SoC according to the embodiments of the present disclosure, that are described in the "Exemplary Method" section described above.

The computer readable storage medium may be one readable medium or any combination of a plurality of readable media. The readable medium may be a readable signal medium or a readable storage medium. The readable storage medium includes, for example but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above.

Basic principles of the present disclosure are described above in combination with specific embodiments. However, advantages, superiorities, and effects mentioned in the present disclosure are merely examples rather than limitations, and it cannot be considered that these advantages, superiorities, and effects are necessary for the embodiments of the present disclosure. In addition, the specific details disclosed above are merely for examples and for ease of understanding, rather than for limitations. The details described above do not limit the present disclosure to necessarily adopting the foregoing specific details for implementation.

A person skilled in the art may make various modifications and variations to the present disclosure without departing from the spirit and the scope of the present disclosure. In this way, if these modifications and variations of the present disclosure fall within the scope of the claims and equivalent technologies of the claims of the present disclosure, the present disclosure also intends to include these modifications and variations.

## Claims

1. A multi-core heterogeneous system on chip, SoC, wherein the multi-core heterogeneous SoC is provided with a universal serial bus, USB, device and integrates a plurality of heterogeneous systems, a first virtual universal asynchronous receiver/transmitter, UART, serial port in the heterogeneous systems establishes a binding relationship with target USB endpoints in the USB device, the USB device is connected to a USB host disposed in a debugging device, and a second virtual UART serial port that is in the debugging device and is corresponding to the heterogeneous system establishes a binding relationship with the target USB endpoints in the USB device through the USB host; and
the multi-core heterogeneous SoC is configured to transmit debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints.

2. The multi-core heterogeneous SoC according to claim 1, wherein the multi-core heterogeneous SoC is further configured to, in response to a power-on startup, invoke a USB device driver stack corresponding to the USB device to initialize the USB device.

3. The multi-core heterogeneous SoC according to claim 1 or 2, wherein the multi-core heterogeneous SoC is further configured to, in response to the USB host recognizing the USB device, send configuration information corresponding to the USB device to the USB host, wherein the configuration information is used for the debugging device to register the second virtual UART serial port corresponding to the heterogeneous system, and to establish the binding relationship between the second virtual UART serial port and the target USB endpoints in the USB device.

4. The multi-core heterogeneous SoC according to any one of claims 1-3, wherein the multi-core heterogeneous SoC is further configured to initialize the heterogeneous system, register the first virtual UART serial port in the heterogeneous system, and establish the binding relationship between the first virtual UART serial port and the target USB endpoints in the USB device.

5. The multi-core heterogeneous SoC according to any one of claims 1-4, wherein the multi-core heterogeneous SoC is specifically configured to receive, through the target USB endpoints in the USB device based on the binding relationship between the first virtual UART serial port and the target USB endpoints, a debugging instruction corresponding to the heterogeneous system that is sent by the debugging device to the target USB endpoints in the USB device through the USB host based on the binding relationship between the second virtual UART serial port and the target USB endpoints.

6. The multi-core heterogeneous SoC according to any one of claims 1-5, wherein the multi-core heterogeneous SoC is specifically configured to send system data corresponding to the heterogeneous system to the USB host in the debugging device through the target USB endpoints in the USB device based on the binding relationship between the first virtual UART serial port and the target USB endpoints.

7. A debugging method for a multi-core heterogeneous system on chip, SoC, wherein the multi-core heterogeneous SoC is provided with a universal serial bus, USB, device and integrates a plurality of heterogeneous systems, a first virtual universal asynchronous receiver/transmitter, UART, serial port in the heterogeneous systems establishes a binding relationship with target USB endpoints in the USB device, the USB device is connected to a USB host disposed in a debugging device, and a second virtual UART serial port that is in the debugging device and is corresponding to the heterogeneous system establishes a binding relationship with the target USB endpoints in the USB device through the USB host; and the method comprises:
transmitting (301), by the multi-core heterogeneous SoC, debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints.

8. The debugging method according to claim 7, further comprising:
in response to a power-on startup, invoking a USB device driver stack corresponding to the USB device to initialize the USB device.

9. The debugging method according to claim 7 or 8, further comprising:
in response to the USB host recognizing the USB device, sending configuration information corresponding to the USB device to the USB host, wherein the configuration information is used for the debugging device to register the second virtual UART serial port corresponding to the heterogeneous system, and to establish the binding relationship between the second virtual UART serial port and the target USB endpoints in the USB device.

10. The debugging method according to any one of claims 7-9, further comprising:
initializing the heterogeneous system, registering the first virtual UART serial port in the heterogeneous system, and establishing the binding relationship between the first virtual UART serial port and the target USB endpoints in the USB device.

11. The debugging method according to any one of claims 7-10, wherein the transmitting, by the multi-core heterogeneous SoC, debugging data corresponding to the heterogeneous system with the debugging device comprises:
receiving, through the target USB endpoints in the USB device based on the binding relationship between the first virtual UART serial port and the target USB endpoints, a debugging instruction corresponding to the heterogeneous system that is sent by the debugging device to the target USB endpoints in the USB device through the USB host based on the binding relationship between the second virtual UART serial port and the target USB endpoints.

12. The debugging method according to any one of claims 7-11, wherein the transmitting, by the multi-core heterogeneous SoC, debugging data corresponding to the heterogeneous system with the debugging device comprises:
sending system data corresponding to the heterogeneous system to the USB host in the debugging device through the target USB endpoints in the USB device based on the binding relationship between the first virtual UART serial port and the target USB endpoints.

13. A debugging apparatus (500) for a multi-core heterogeneous system on chip, SoC, wherein the apparatus is applied to the multi-core heterogeneous SoC according to any one of claims 1 to 6, the multi-core heterogeneous SoC is provided with a universal serial bus, USB, device and integrates a plurality of heterogeneous systems, a first virtual universal asynchronous receiver/transmitter, UART, serial port in the heterogeneous systems establishes a binding relationship with target USB endpoints in the USB device, the USB device is connected to a USB host disposed in a debugging device, and a second virtual UART serial port that is in the debugging device and is corresponding to the heterogeneous system establishes a binding relationship with the target USB endpoints in the USB device through the USB host; and the apparatus comprises:
a debugging module (510), configured to transmit, through the multi-core heterogeneous SoC, debugging data corresponding to the heterogeneous system with the debugging device through the USB device and the USB host based on the first virtual UART serial port in the heterogeneous system, the target USB endpoints that are in the USB device and are bound to the first virtual UART serial port, and the second virtual UART serial port, in the debugging device, that is corresponding to the heterogeneous system and is bound to the target USB endpoints.

14. An electronic device (10), wherein the electronic device (10) comprises:
a processor (11); and
a memory (12), configured to store instructions executable by the processor (11), wherein
the processor (11) is configured to read the executable instructions from the memory (12), and execute the instructions to implement the debugging method for a multi-core heterogeneous SoC according to any one of claims 7-12.

15. A computer readable storage medium, wherein the storage medium stores a computer program, and the computer program is executed by a processor to implement the debugging method for a multi-core heterogeneous SoC according to any one of claims 7-12.
